# FASCICULE DE BREVET EUROPEEN

(11) **EP 3 083 290 B1**
(45) Date de publication et mention de la délivrance du brevet: **05.12.2018**
(21) Numéro de dépôt: 14836962.2
(22) Date de dépôt: 13.10.2014
(51) Int. Cl.: B60C 19/12, B60C 19/00

(54) **PNEUMATIQUE AVEC PAROI AUTO-OBTURANTE ET FAIBLE NIVEAU SONORE**
REIFEN MIT SELBSTDICHTENDER REIFENWAND MIT GERINGEM LÄRMNIVEAU
TYRE WITH A SELF-SEALANT INNERLINER COMPRISING A LOW NOISE LEVEL

(30) Priorité: 19.12.2013 FR 1303004
(43) Date de publication de la demande: 26.10.2016
(73) Titulaire: Compagnie Générale des Etablissements Michelin, 63000 Clermont-Ferrand (FR)
(72) Inventeur: LE DOUCEN, Jacques, F-63040 Clermont-Ferrand Cedex 9 (FR); GUILLEUX, Eric, F-63040 Clermont-Ferrand Cedex 9 (FR); MERINO LOPEZ, José, F-63040 Clermont-Ferrand Cedex 9 (FR)
(74) Mandataire: Millanvois, Patrick Jacques Jean
(86) Numéro de dépôt international: PCT/IB2014/002081
(87) Numéro de publication internationale: WO 2015/092497

(56) Documents cités:
- JP-A- 2004 082 387
- JP-A- 2012 254 655

## Description

### DOMAINE TECHNIQUE DE L'INVENTION

L'invention concerne un pneumatique comportant deux flancs, un sommet pourvu radialement extérieurement d'une bande de roulement, une structure de renfort de type carcasse, au moins une armature de sommet, la surface intérieure des flancs et du sommet formant une paroi intérieure dont au moins une partie est recouverte d'une couche de composition auto-obturante.

### ETAT DE LA TECHNIQUE ANTERIEURE

On connaît des pneumatiques pourvus d'une couche interne de mélange auto-obturant, prévu pour s'infiltrer et remplir d'éventuelles ouvertures ou perçages du pneumatique, en particulier au niveau de la zone du sommet. La demande WO2010/009849 décrit un exemple d'un tel pneumatique pourvu d'une composition d'élastomère auto-obturante, utilisable notamment comme couche anti-crevaison dans un objet pneumatique, comportant au moins : à titre d'élastomère majoritaire, un élastomère diénique insaturé; entre 30 et 90 pce d'une résine hydrocarbonée; 0 à moins de 30 pce d'une charge. La couche anti-crevaison est avantageusement associée à une couche étanche à l'air, par exemple à base de caoutchouc butyl, pour constituer dans l'objet pneumatique un stratifié étanche à l'air et anti-crevaison.

On observe que l'efficacité de cette couche auto-obturante est liée à l'indice de viscosité du produit appliqué. Par ailleurs, une telle couche possède souvent un niveau d'adhérence élevé. Ce niveau d'adhérence permet au produit auto-obturant de bien coller à la paroi interne du pneumatique. Il offre par la même occasion un support adhérent pour toute particule présente dans la cavité du pneumatique. Un nombre plus ou moins grand de telles particules peuvent donc adhérer à la paroi interne. Si le pneumatique non monté se trouve dans un endroit poussiéreux ou sale, un certain nombre de particules, poussières ou détritus de toutes sortes peuvent se retrouvés collés contre la paroi interne.

On connaît également des pneumatiques pourvus de dispositifs ou moyens permettant de réduire le bruit de roulement. La plupart du temps, les atténuateurs de bruit sont en mousse avec de nombreuses porosités et sont disposés soit contre la paroi interne de la bande de roulement ou contre la jante. Ces inserts, du fait de leur volume important, présentent une masse sensiblement importante. Ils constituent par ailleurs un composant additionnel au niveau de la roue.

Le document EP 2554617 décrit un pneumatique pourvu d'une couche de mousse anti-bruit collée à l'intérieur du pneumatique, sous la bande de roulement. Un adhésif à base de silicone est appliqué sur la surface réceptrice avant l'application de la couche de mousse. Le procédé d'application en deux étapes, dont l'étape d'application de la couche de mousse implique une manipulation fastidieuse d'une couche difficile à manipuler, est complexe, coûteux et sujet à des aléas.

On connaît enfin des pneumatiques pourvus d'une couche interne permettant d'atténuer le bruit, collée contre une couche ayant de propriétés auto-obturante. Le document EP 2562009 décrit un exemple d'un tel pneumatique comprenant un matériau poreux absorbant les sons. Le matériau poreux est collé à la paroi interne par l'intermédiaire d'une couche d'étanchéité sur la surface intérieure des parois du pneumatique. La couche de matériau d'étanchéité comprend de 100 à 400 parties en poids de polyisobutylène, 10 pour 100 parties en poids d'un additif inorganique et 1 à 15 parties en poids d'un agent de vulcanisation, par rapport à 100 parties en poids d'un caoutchouc butyle. L'arrangement décrit permet de réduire le bruit interne en agissant sur la distribution de l'énergie sonore. Le matériau poreux est toutefois disposé sous forme d'une couche. Or, la mise en place d'une couche anti-bruit dans le but de la disposer précisément sur la couche auto-obturante procurant un support collant présente une grande difficulté technique, puisqu'il faut prévoir l'acheminement de la couche prête à appliquer dans la zone interne du pneumatique, puis appliquer la couche sur toute la circonférence. Une telle mise en place implique un équipement industriel complexe et coûteux. Les performances de la couche anti-bruit sont par ailleurs intrinsèquement limitées, du fait de la surface active qui est restreinte au niveau de la surface de la couche. Le document JP2004082387 décrit un procédé d'application d'un adhésif sur la surface intérieure du pneumatique et un procédé pour lier des fibres courtes innombrables à la section revêtue de l'adhésif. Le document JP2012254655 décrit un pneumatique dont les fibres courtes sont insérées sur la face interne du pneumatique à l'aide d'un adhésif et le procédé de fabrication du pneumatique y afférent.

Il existe donc un besoin pour un pneumatique avec couche auto-obturante, ne présentant pas les inconvénients des solutions actuelles. Il existe également un besoin pour un pneumatique pourvu de moyens réduisant l'impact du bruit de roulement, sans affecter la masse de la roue.

Pour pallier ces différents inconvénients, l'invention prévoit différents moyens techniques.

### EXPOSE DE L'INVENTION

Tout d'abord, un premier objet de l'invention consiste à prévoir un pneumatique avec couche auto-obturante à laquelle les particules ou poussières ne peuvent pas adhérer.

Un autre objet de l'invention consiste à prévoir un pneumatique avec couche auto-obturante présentant un niveau sonore réduit.

Encore un objet de l'invention consiste à prévoir un pneumatique avec couche auto-obturante à niveau sonore réduit, sans augmentation significative de la masse.

Pour ce faire, l'invention prévoit tout d'abord un pneumatique comportant deux flancs, un sommet pourvu radialement extérieurement d'une bande de roulement, une structure de renfort de type carcasse, au moins une armature de sommet, la surface intérieure des flancs et du sommet formant une paroi intérieure dont au moins une partie est recouverte d'une couche de composition auto-obturante, et au moins une portion de la surface libre de la couche de composition auto-obturante est recouverte par un arrangement de particules absorbant l'énergie acoustique.

Une telle solution présente les avantages inhérents aux pneumatiques anti-crevaison, sans pour autant présenter une paroi interne collante parasite interne sur laquelle les particules se posent. La présence de la couche anti-bruit permet par la même occasion de réduire ou de supprimer les bruits de cavité. Enfin, le pneumatique présente une réduction du niveau de bruit interne (Road Noise) perçu par l'utilisateur final.

La présente invention permet d'offrir un effet anti cavité efficace avec un arrangement sensiblement mince de matériau anti-bruit, sensiblement moins lourd (à densité de mousse comparable) qu'une solution avec insert en mousse sous forme de couche, de bloc ou de couronne. Des tests effectués en laboratoire ont permis de démontrer des réductions de masse de l'ordre de 30 % à 60 %.

De manière avantageuse, l'arrangement de particules absorbant l'énergie acoustique est effectué de manière discontinue.

Selon un mode de réalisation avantageux, l'arrangement de particules absorbant l'énergie acoustique est agencé de façon à recouvrir sensiblement la surface intérieure d'une épaule à l'autre du pneumatique.

De manière avantageuse, l'arrangement de particules absorbant l'énergie acoustique comprend des particules ou grains de dimension moyenne comprise entre 0,5 cm x 0,5 cm x 0,5 cm et 7 cm x 7 cm x 7 cm.

Dans une variante avantageuse, les particules ou grains de l'arrangement de particules absorbant l'énergie acoustique ont une forme géométriquement quelconque ou définie telle que cube, pyramide, sphère.

Les particules peuvent se présenter de manière plus préférée sous forme de filaments disposés sur un support et très proches les uns des autres sans pour autant être solidaires les uns aux autres, ressemblant à une structure équivalente à celle d'une fourrure.

Lorsque le matériau se présente sous forme de filament, les filaments ont de préférence une section inférieure ou égale à 1,5 mm x 1,5 mm et un rapport longueur/largeur supérieure à 5, préférentiellement supérieure à 10.

Les particules sont disposées de manière discontinue. Ceci procure une augmentation de la surface de mousse en contact avec l'air interne, et donc une augmentation du pouvoir absorbant des ondes acoustiques. Cette discontinuité occasionne également une perturbation de la colonne d'air interne au pneumatique, du fait de la géométrie irrégulière des particules, permettant ainsi de diminuer l'intensité acoustique.

Enfin une disposition discontinue des particules permet d'obtenir une couverture surfacique plus efficace de la surface interne du pneumatique.

De manière avantageuse, les particules ou grains sont dispersées de manière aléatoire ou organisée de manière volontaire.

Selon une autre variante, l'arrangement de particule absorbant l'énergie acoustique présente une épaisseur moyenne comprise entre 3 mm et 100 mm, et plus préférentiellement entre 10 mm et 50 mm.

Selon encore un mode de réalisation avantageux, le matériau de particules de l'arrangement absorbant l'énergie acoustique est choisi parmi le polyuréthane, le polyéthylène, le polypropylène, le polyimide, la mélamine, le polychloroprène, le caoutchouc EPDM, l'éthylène-coacétate de vinyle le polystyrène expansé, ayant une densité de 2%, 5%, ou 10% par rapport au polystyrène non expansé, l'ouate et leurs mélanges.

De manière préférée, le matériau de particules tel que défini ci-dessus est expansé.

De préférence, le matériau constituant la couche de composition auto-obturante est choisi parmi ceux cités dans les documents WO2010/009849 et WO2010/012413.

Ce pneumatique comporte une couche de produit auto-obturant, c'est-à-dire que la très grande majorité des crevaisons n'aura aucune conséquence sur la pression interne de gonflage. En d'autres termes, lorsqu'un objet pénètre dans la bande de roulement et traverse cette dernière, le produit auto-obturant vient assurer l'étanchéité en périphérie de cet objet. Dans le cas où l'objet perforant ne resterait pas en place dans la bande de roulement, le produit auto-obturant vient combler le trou et ainsi empêcher la pression interne de chute.

L'invention prévoit également un procédé d'application d'un arrangement de particules absorbant l'énergie acoustique, pour un pneumatique tel que préalablement décrit, comportant les étapes consistant à :
- obtenir un pneumatique pourvu d'une couche de composition auto-obturante formant une pellicule adhésive au niveau des parois internes du pneumatique ;
- appliquer un arrangement de particules absorbant l'énergie acoustique contre au moins une portion de la pellicule adhésive.

Le matériau de particules peut comprendre des caractéristiques profilaires et dimensionnelles non uniformes.

Le matériau de particules est de préférence appliqué après vulcanisation du pneumatique.

Selon un mode de réalisation avantageux, l'étape d'application est effectuée par projection de particules contre la pellicule adhésive.

### DESCRIPTION DES FIGURES

Tous les détails de réalisation sont donnés dans la description qui suit, complétée par les figures 1 à 4, présentées uniquement à des fins d'exemples non limitatifs, et dans lesquelles:
- la figure 1 est une représentation schématique d'une coupe transversale d'un pneumatique selon l'invention ;
- la figure 2 est une coupe selon un plan méridien du pneumatique de la figure 1
- la figure 3 montre un graphique illustrant un exemple de niveau sonore en fonction de la fréquence pour un pneumatique avec mousse insonorisante et sans mousse insonorisante ;
- la figure 4 montre une comparaison des modes cavités pour deux exemples de véhicules.

### DESCRIPTION DETAILLEE DE L'INVENTION

### DEFINITIONS :

Dans le présent document, on entend par « grains » ou « particules » les éléments discrets utilisés pour absorber la pression acoustique. On utilise avantageusement des particules de divers profils afin de procurer un effet d'absorption efficace pour plusieurs profils fréquentiels de l'énergie acoustique. Les particules sont disposées le long des parois internes du pneumatique, pour former un arrangement plus ou moins uniforme et plus ou moins continu.

On entend par « arrangement de particules absorbant l'énergie acoustique », une surface comportant une pluralité de grains ou particules discrètes disposées de façon plus ou moins continue. Du fait de la forme des particules et du mode d'application par projection, des espaces libres peuvent être présents entre certaines particules. L'agencement des particules est avantageusement aléatoire. Les particules peuvent présenter des profils géométriques différents ou identiques dans leur taille et/ou leur forme géométrique.

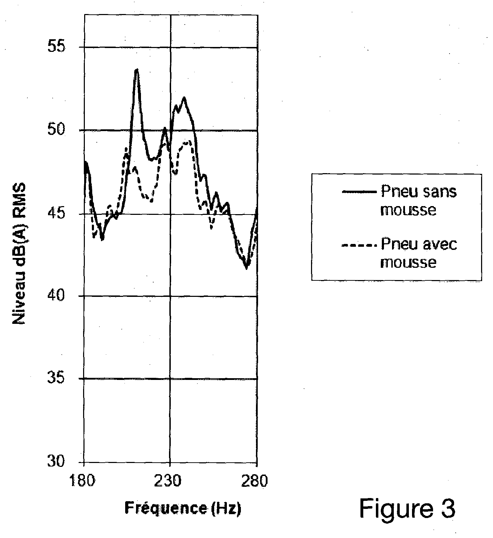

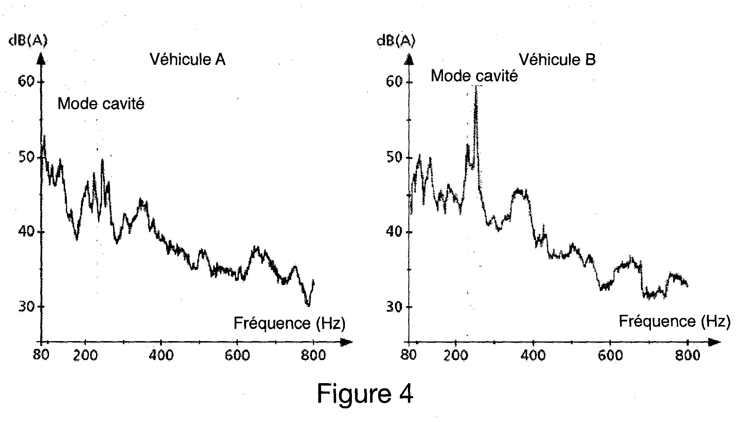

On entend par « mode de cavité » un mode vibratoire tel que montré dans l'exemple de la figure 3 : le roulage d'un pneumatique sur une surface présentant des macro rugosités cause une excitation de la structure du pneumatique, mais aussi une excitation de l'air situé à l'intérieur de la cavité du pneumatique. La colonne d'air présente à l'intérieur de la cavité du pneumatique vibre selon son ou ses modes d'excitation naturelle. Le premier mode naturel, désigné par le terme « premier mode de cavité », se situe généralement entre 200 Hz et 250 Hz pour un pneumatique de véhicule automobile, en fonction de la dimension du pneumatique. Lors de la résonnance, il y a création d'une pression acoustique sur la roue, pouvant entrainer la vibration de cette roue. Ces vibrations sont ensuite transmises au centre de la roue, puis à l'habitacle, au moyen d'une propagation par la structure du véhicule. Puisqu'il s'agit d'une vibration sonore structurale, la structure du véhicule peut avoir une influence importante sur la performance globale. La figure 4 présente deux exemples de profils acoustiques, pour deux véhicules. Les modes de cavité sont identifiés pour chaque cas, montrant bien les comportements distincts des véhicules en regard du mode de cavité.

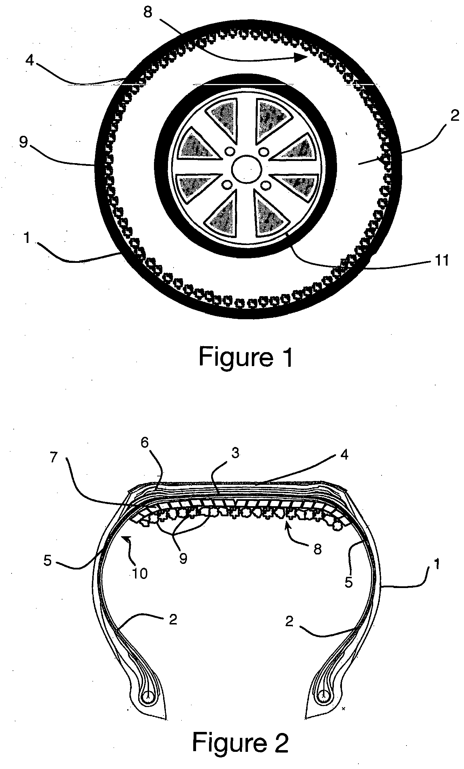

La figure 1 est une représentation schématique d'un exemple de réalisation d'un pneumatique 1 selon l'invention, présenté en coupe transversale et monté sur une jante 11. Les grains ou particules 9 sont répartis contre la paroi intérieure 10, en particulier sous la bande de roulement 4 du pneumatique. L'utilisation de particules 9 possédant des caractéristiques dimensionnelles et profilaires non uniformes, tel qu'illustré dans l'exemple de réalisation de la figure 2, permet de constituer un arrangement de particules 9 dont le profil non uniforme procure un potentiel d'amortissement sur une vaste gamme de fréquences acoustiques. Pour les particules 9, on utilise soit plusieurs profils définis, chacun étant utilisé pour une portion des particules appliquées, soit une pluralité de profils aléatoires.

La figure 2 montre un exemple non limitatif de répartition des particules 9 le long de la paroi interne 10 du pneumatique. Les particules 9, de dimension et de forme géométrique non uniformes, sont concentrées au niveau de la bande de roulement 4 du pneumatique, sensiblement d'une épaule à l'autre, ne recouvrant pas ou peu les parois internes des flancs 2. Le positionnement et l'étendue de la zone recouverte par les particules varie en fonction de plusieurs paramètres, en particulier en fonction de l'étendue de la couche 7 auto-obturante, de façon à recouvrir au mieux cette dernière.

Selon divers modes de réalisation, différents matériaux peuvent être utilisés pour former les particules 9. On utilise avantageusement l'un ou plusieurs des matériaux suivants : polyuréthane, le polyéthylène, le polypropylène, le polyimide, la mélamine, le polychloroprène, le caoutchouc EPDM, l'éthylène-coacétate de vinyle et leurs mélanges. Chaque particule peut être constitués d'un ou plusieurs matériaux. Des particules de plusieurs natures et/ou formes et/ou profils et/ou dimensions peuvent être appliquées sur un même pneumatique.

Pour appliquer un arrangement de particules 9 sur la paroi interne 10 d'un pneumatique 1, un pneumatique à l'état de produit fini et vulcanisé, avec sa couche 7 de composition auto-obturante, est requis. La couche de composition auto-obturante forme une pellicule fortement adhésive au niveau des parois internes 10 du pneumatique sur laquelle les particules 9 adhèrent durablement. Les particules 9 sont appliquées par projection contre la paroi interne 10. Celles-ci adhèrent uniquement contre la zone couverte par la couche auto-obturante, de sorte que les autres zones restent libres de particules.

Les Figures et leurs descriptions faites ci-dessus illustrent l'invention plutôt qu'elles ne la limitent. En particulier, l'invention et ses différentes variantes viennent d'être décrites en relation avec un exemple particulier comportant un agencement de particules au niveau de la bande de roulement du pneumatique.

Néanmoins, il est évident pour un homme du métier que l'invention peut être étendue à d'autres modes de réalisation dans lesquels en variantes, on prévoit un agencement de particules sur une zone plus ou moins large, en fonction des caractéristiques sonores recherchées.

Dans l'exemple illustré à la figure 2, la zone d'application s'étend d'une épaule à l'autre du pneumatique. Selon une première variante, la zone d'application se prolonge sur une au moins une portion des flancs 2. Selon une autre variante, la zone d'application correspond sensiblement à la portion centrale de la bande de roulement 4. Selon d'autres variantes, l'arrangement de particules est appliqué sous forme de bandes étroites circonférentielles.

Les signes de références dans les revendications n'ont aucun caractère limitatif. Les verbes "comprendre" et "comporter" n'excluent pas la présence d'autres éléments que ceux listés dans les revendications.

## Revendications

1. Pneumatique (1) comportant deux flancs (2), un sommet (3) pourvu radialement extérieurement d'une bande de roulement (4), une structure de renfort (5) de type carcasse, au moins une armature (6) de sommet, la surface intérieure des flancs et du sommet formant une paroi intérieure (10), ledit pneumatique comportant un arrangement pour absorber l'énergie acoustique et étant **caractérisé en ce qu'**au moins une partie de la paroi intérieure (10) est recouverte d'une couche (7) de composition auto-obturante, formant une pellicule adhésive au niveau de la paroi intérieure (10) du pneumatique et **en ce qu'**au moins une portion de la surface libre de la couche (7) de composition auto-obturante est recouverte par un arrangement (8) de particules (9) absorbant l'énergie acoustique, ledit arrangement (8) de particules (9) absorbant l'énergie acoustique étant effectué de manière discontinue, les particules adhérant durablement à la pellicule adhésive.

2. Pneumatique selon la revendication 1, dans lequel l'arrangement (8) de particules (9) absorbant l'énergie acoustique est agencé de façon à recouvrir sensiblement la surface intérieure (10) d'une épaule à l'autre du pneumatique.

3. Pneumatique selon l'une des revendications 1 ou 2, **caractérisé en ce que** l'arrangement (8) de particules (9) absorbant l'énergie acoustique comprend des particules (9) ou grains de dimension moyenne comprise entre 0,5 cm x 0,5 cm x 0,5 cm et 7 cm x 7 cm x 7 cm.

4. Pneumatique selon la revendication 3, **caractérisé en ce que** les particules (9) ou grains de l'arrangement (8) de particules (9) absorbant l'énergie acoustique ont une forme géométriquement quelconque ou définie.

5. Pneumatique selon l'une des revendications 3 ou 4, **caractérisé en ce que** les particules (9) ou grains sont dispersées de manière aléatoire ou organisée.

6. Pneumatique selon l'une des revendications précédentes, **caractérisé en ce que** l'arrangement (8) de particules (9) absorbant l'énergie acoustique présente une épaisseur moyenne comprise entre 3 mm et 100 mm.

7. Pneumatique selon l'une des revendications précédentes, **caractérisé en ce que** l'arrangement de particules absorbant l'énergie acoustique présente une épaisseur comprise entre 10 mm et 50 mm.

8. Pneumatique selon l'une des revendications précédentes, dans lequel le matériau de particules (9) de l'arrangement (8) absorbant l'énergie acoustique est choisi parmi le polyuréthane, le polyéthylène, le polypropylène, le polyimide, la mélamine, le polychloroprène, le caoutchouc EPDM, l'éthylène-coacétate de vinyle, le polystyrène expansé ayant une densité de 2%, 5%, ou 10% par rapport au polystyrène non expansé, l'ouate et leurs mélanges.

9. Pneumatique selon la revendication 8, dans lequel le matériau de particules est expansé.

10. Pneumatique selon l'une des revendications précédentes, dans lequel le matériau de particules comprend des caractéristiques profilaires et dimensionnelles non uniformes.

11. Procédé d'application d'un arrangement (8) de particules (9) absorbant l'énergie acoustique, pour un pneumatique (1) selon l'une des revendications 1 à 10, comportant les étapes consistant à :
- obtenir un pneumatique (1) pourvu d'une couche de composition (7) auto-obturante formant une pellicule adhésive au niveau des parois internes (10) du pneumatique ;
- appliquer un arrangement (8) de particules (9) absorbant l'énergie acoustique, ledit arrangement étant effectué de manière discontinue contre au moins une portion de la pellicule adhésive (7).

12. Procédé d'application d'une couche absorbante selon la revendication 11, dans lequel l'étape d'application est effectuée par projection de particules (9) contre la pellicule adhésive.

13. Procédé selon la revendication 11, dans lequel le matériau de particules est appliqué après vulcanisation du pneumatique.

## Patentansprüche

1. Reifen (1), umfassend zwei Flanken (2), einen Scheitel (3), der radial außen mit einer Lauffläche (4) versehen ist, eine Verstärkungsstruktur (5) des Typs der Karkasse, mindestens eine Scheitelbewehrung (6), wobei die Innenfläche der Flanken und der Scheitel eine Innenwand (10) bilden, wobei der Reifen eine Anordnung aufweist, um die akustische Energie zu absorbieren und **dadurch gekennzeichnet ist, dass** mindestens ein Teil der Innenwand (10) mit einer Schicht (7) aus selbstdichtender Zusammensetzung bedeckt ist, die eine Klebefolie an der Innenwand (10) des Reifens bildet, und dadurch, dass mindestens ein Abschnitt der freien Oberfläche der Schicht (7) aus selbstdichtende Zusammensetzung durch eine Anordnung (8) von Teilchen (9) bedeckt ist, die die akustische Energie absorbiert, wobei, nachdem die Anordnung (8) von Teilchen (9), die die akustische Energie absorbiert, diskontinuierlich erstellt wird, die Teilchen dauerhaft an der Klebefolie haften.

2. Vorrichtung nach Anspruch 1, wobei die Anordnung (8) von Teilchen (9), die die akustische Energie absorbiert, derart ausgebildet ist, um im Wesentlichen die Innenfläche (10) von einer Schulter zur anderen des Reifens zu bedecken.

3. Reifen nach einem der Ansprüche 1 oder 2, **dadurch gekennzeichnet, dass** die Anordnung (8) von Teilchen (9), die die akustische Energie absorbiert, Teilchen (9) oder Körner mit einer durchschnittlichen Größe von 0,5 cm x 0,5 cm x 0,5 cm und 7 cm x 7 cm x 7 cm aufweist.

4. Reifen nach Anspruch 3, **dadurch gekennzeichnet, dass** die Teilchen (9) oder Körner der Anordnung (8) von Teilchen (9), die die akustische Energie absorbiert, eine geometrisch beliebige oder definierte Form aufweisen.

5. Reifen nach einem der Ansprüche 3 oder 4, **dadurch gekennzeichnet, dass** die Teilchen (9) oder Körner zufällig oder organisiert verteilt sind.

6. Reifen nach einem der vorhergehenden Ansprüche, **dadurch gekennzeichnet, dass** die Anordnung (8) von Teilchen (9), die die akustische Energie absorbiert, eine mittlere Dicke zwischen 3 mm und 100 mm aufweist.

7. Reifen nach einem der vorhergehenden Ansprüche, **dadurch gekennzeichnet, dass** die Anordnung von Teilchen, die die akustische Energie absorbiert, eine mittlere Dicke zwischen 10 mm und 50 mm aufweist.

8. Reifen nach einem der vorhergehenden Ansprüche, wobei das Material der Teilchen (9) der Anordnung (8), die die akustische Energie absorbiert, ausgewählt ist aus Polyurethan, Polyethylen, Polypropylen, Polyimid, Melamin, Polychloropren, EPDM-Kautschuk, Ethylen-Vinyl-Co-Acetat, expandiertem Polystyrol mit einer Dichte von 2 %, 5 % oder 10 %, bezogen auf das nicht expandierte Polystyrol, Watte und Mischungen davon.

9. Reifen nach Anspruch 8, wobei das Material der Teilchen expandiert ist.

10. Reifen nach einem der vorhergehenden Ansprüche, wobei das Material der Teilchen nicht einheitliche Profil- und Abmessungseigenschaften aufweist.

11. Verfahren zum Aufbringen von einer Anordnung (8) von Teilchen (9), die die akustische Energie absorbiert, für einen Reifen (1) nach einem der Ansprüche 1 bis 10, umfassend die Schritte, die darin bestehen:
- einen Reifen (1) zu erhalten, der mit einer Schicht (7) aus selbstdichtender Zusammensetzung versehen ist, die eine Klebefolie an den Innenwänden (10) des Reifens bildet,
- eine Anordnung (8) von Teilchen (9), die die akustische Energie absorbiert, aufzubringen, wobei die Anordnung gegen mindestens einen Abschnitt der Klebefolie (7) diskontinuierlich erstellt wird.

12. Verfahren zum Aufbringen von einer absorbierenden Schicht nach Anspruch 11, wobei der Schritt des Aufbringens durch Aufstrahlen von Teilchen (9) gegen die Klebefolie durchgeführt wird.

13. Verfahren nach Anspruch 11, wobei das Material der Teilchen nach dem Vulkanisieren des Reifens aufgebracht wird.

## Claims

1. Tyre (1) comprising two sidewalls (2), a crown (3) provided radially on the outside with a tread (4), a carcass-type reinforcing structure (5), at least one crown reinforcement (6), the interior surface of the sidewalls and of the crown forming an interior wall (10) the said tyre comprising an arrangement for absorbing acoustic energy and being **characterized in that** at least part of the interior wall (10) is covered with a layer (7) of self-sealing composition, forming an adhesive film on the interior wall of the tyre (10) and **in that** at least one portion of the free surface of the layer (7) of self-sealing composition is covered with an arrangement (8) of acoustic-energy-absorbing particles (9), the said arrangement (8) of acoustic-energy-absorbing particles (9) being a discontinuous arrangement, the particles adhering durably to the adhesive film.

2. Tyre according to Claim 1, in which the arrangement (8) of acoustic-energy-absorbing particles (9) is arranged so that it substantially covers the interior surface (10) of the tyre from one shoulder to the other.

3. Tyre according to either of Claims 1 and 2, **characterized in that** the arrangement (8) of acoustic-energy-absorbing particles (9) comprises particles (9) or grains with a mean size of between 0.5 cm x 0.5 cm x 0.5 cm and 7 cm x 7 cm x 7 cm.

4. Tyre according to Claim 3, **characterized in that** the particles (9) or grains of the arrangement (8) of acoustic-energy-absorbing particles (9) have a geometrically arbitrary or defined shape.

5. Tyre according to either of Claims 3 and 4, **characterized in that** the particles (9) or grains are dispersed randomly or in an organized manner.

6. Tyre according to one of the preceding claims, **characterized in that** the arrangement (8) of acoustic-energy-absorbing particles (9) has a mean thickness of between 3 mm and 100 mm.

7. Tyre according to one of the preceding claims, **characterized in that** the arrangement of acoustic-energy-absorbing particles has a thickness of between 10 mm and 50 mm.

8. Tyre according to one of the preceding claims, in which the material of particles (9) of the acoustic-energy-absorbing arrangement (8) is selected from polyurethane, polyethylene, polypropylene, polyimide, melamine, polychloroprene, EPDM rubber, ethylene-vinyl coacetate, expanded polystyrene having a density of 2%, 5%, or 10% with respect to non-expanded polystyrene, wadding and mixtures thereof.

9. Tyre according to Claim 8, in which the particles material is expanded.

10. Tyre according to one of the preceding claims, in which the particles material has non-uniform profile and dimension characteristics.

11. Method for applying an arrangement (8) of acoustic-energy-absorbing particles (9), for a tyre (1) according to one of Claims 1 to 10, comprising the steps consisting in:
- obtaining a tyre (1) provided with a layer of self-sealing composition (7) forming an adhesive film on the internal walls (10) of the tyre;
- applying an arrangement (8) of acoustic-energy-absorbing particles (9), the said arrangement being discontinuous, to at least a portion of the adhesive film (7).

12. Method for applying an absorbent layer according to Claim 11, in which this application step is performed by spraying particles (9) onto the adhesive film.

13. Method according to Claim 11, in which the particles material is applied after the tyre has been vulcanized.
